# EUROPEAN PATENT APPLICATION

(11) **EP 4 825 234 A1**
(43) Date of publication of application: **21.10.2026**
(21) Application number: 23961466.2
(22) Date of filing: 13.12.2023
(51) Int. Cl.: A24F 40/53, A24F 40/40

(54) **AEROSOL GENERATION DEVICE**

(71) Applicant: Japan Tobacco Inc., Tokyo 105-6927 (JP)
(72) Inventor: ARADACHI, Takao, Tokyo 130-8603 (JP); AOYAMA, Tatsunari, Tokyo 130-8603 (JP)
(74) Representative: Hoffmann Eitle
(86) International application number: PCT/JP2023/044716
(87) International publication number: WO 2025/126400

(57) **Abstract**

This inhalation device (100) comprises a power source unit (111), a control unit (116) controlling the power source unit, (111) and a case (20) having a power source accommodating portion (200) for accommodating the power source unit (111), the inhalation device heating an aerosol source to generate an aerosol. the power source accommodating portion (200) has an opening (opening 201) in which the power source unit (111) can be inserted and removed, The power source unit (111) is removably mounted in the power source accommodating portion (200). The inhalation device (100) further comprises a panel (30) for opening and closing the opening (201) of the power source accommodating portion (200), and an open/close detection sensor (20d) for detecting an open/close state of the opening (201) by the panel (30). The control unit (116) controls the power source unit (111) based on a detection result of the open/close detection sensor (20d).

## Description

### TECHNICAL FIELD

The present disclosure relates to an aerosol-generating device.

### BACKGROUND ART

Inhalation devices that generate an aerosol with added flavor components and allow a user to inhale the generated aerosol, for example, are conventionally know as one type of aerosol generation device. This kind of inhalation device typically generates the aerosol by heating an aerosol source by means of a heating unit, which is an electrically-resistive or inductively-heated heater, by supplying the heating unit with power from a power source such as a rechargeable battery.

In this type of inhalation device, it is known that the battery can be replaced by a user, as in the inhalation devices described in PTL 1 to PTL 2.

### CITATION LIST

### PATENT LITERATURE

PTL 1: CN 107373765 A
PTL 2: CN 206507325 U

### SUMMARY OF INVENTION

### PROBLEM TO BE SOLVED BY THE INVENTION

In inhalation devices in which the battery is replaceable by a user, if the battery is replaced during operation of the battery (e.g. During power supply from the battery to the heating unit or during charging of the battery), faults may occur in the inhalation device and the battery.

The present disclosure discloses an aerosol generation device that can inhibit the occurrence of faults in the aerosol generation device and the power source unit.

### SOLUTION TO PROBLEM

An aerosol generation device according to the present disclosure comprises:
a power source unit;
a control unit for controlling the power source unit; and
a housing having a power source accommodating portion for accommodating the power source unit,
the aerosol generation device heating an aerosol source to generate an aerosol, wherein
the power source accommodating portion has an opening in which the power source unit can be inserted and removed,
the power source unit is removably installed in the power source accommodating portion, the aerosol generation device further comprises
a cover member for opening and closing the opening of the power source accommodating portion, and
a detection unit for detecting an open/close status of the opening by the cover member, and
the control unit controls operation of the power source unit on the basis of a detection result of the detection unit.

### ADVANTAGEOUS EFFECTS OF INVENTION

According to the aerosol generation device of the present disclosure, faults may be inhibited in the aerosol generation device and in the power source unit.

### BRIEF DESCRIPTION OF DRAWINGS

Fig. 1 is a schematic diagram schematically showing a first configuration example of an inhalation device according to the present disclosure.
Fig. 2 is a schematic diagram schematically showing a second configuration example of an inhalation device according to the present disclosure.
Fig. 3 is an overall oblique view of the inhalation device according to the present disclosure.
Fig. 4 is a schematic diagram illustrating an operation mode of the inhalation device according to the present disclosure.
Fig. 5 is a schematic diagram illustrating a first example of an aspect of insertion/removal of the power source unit in the inhalation device according to the present disclosure.
Fig. 6 is a schematic diagram illustrating a second example of an aspect of insertion/removal of the power source unit in the inhalation device according to the present disclosure.
Fig. 7 is a schematic diagram schematically showing one configuration example of the charging and discharging portion of the power source unit in the inhalation device according to the present disclosure.
Fig. 8 is a flow chart showing an example of charging control of the power source unit in the inhalation device according to the present disclosure.
Fig. 9 is a diagram showing an example of a change in battery voltage of the power source unit when charging control of the power source unit is performed in the inhalation device of the present disclosure.
Fig. 10 is a flow chart showing one example of heating control in the aerosol generation device of the present disclosure.

### EMBODIMENTS OF THE INVENTION

An embodiment of an aerosol-generating device according to the present disclosure will be described in detail below with reference to the drawings. The embodiment described below is an exemplary case in which the aerosol-generating device according to the present disclosure is applied to an inhalation device. Note that the drawings are to be viewed in the orientation of the reference signs. Furthermore, hereinafter, identical or similar elements may be assigned identical or similar reference signs, and descriptions thereof may be omitted or simplified as appropriate.

### 1. Configuration example of inhalation device

The inhalation device of this embodiment, which constitutes an example of the aerosol generation device of the present disclosure, is a device for generating a substance to be inhaled by a user. Hereinafter, the substance generated by the inhalation device will be described as being an aerosol. Alternatively, the substance generated by the inhalation device may be a gas.

### <1-1. First configuration example of inhalation device>

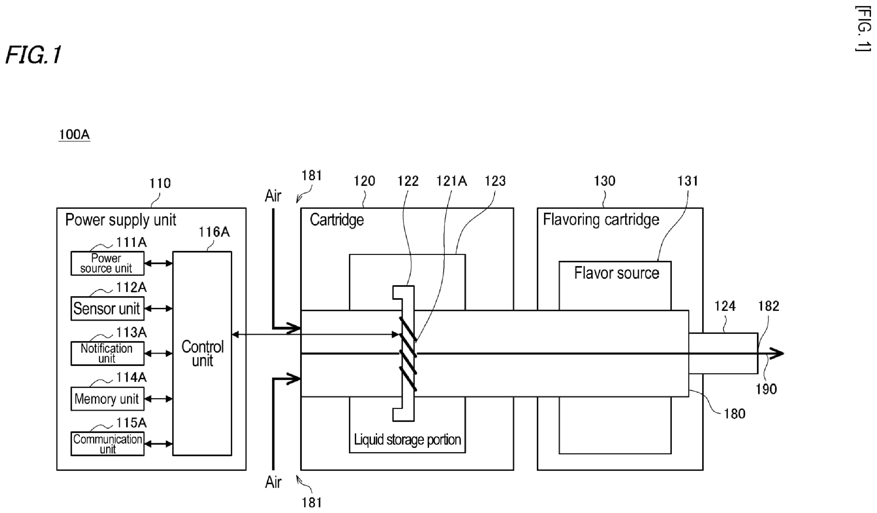

Fig. 1 is a schematic diagram schematically showing a first configuration example of an inhalation device. As shown in fig. 1, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

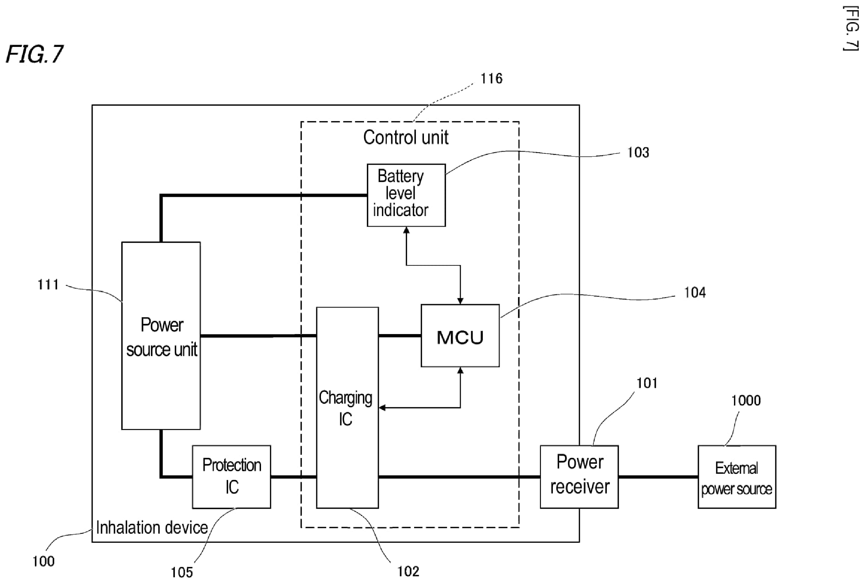

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source 1000 (see fig. 7). Here, the specific power is power that the inhalation device 100A is capable of receiving in terms of hardware, and may be, for example, direct current power having a predetermined voltage (for example, 5 to 20 [V]). The external power source 1000 may be an alternating current (AC) adapter configured to be capable of outputting the specific power, for example. Furthermore, the external power source 1000 is not limited to an AC adapter, and may be, for example, a portable charger (also referred to as a mobile battery), a personal computer (PC), a smartphone, a tablet terminal, or the like. The power source unit 111A may be configured, for example, by a rechargeable battery such as a lithium ion secondary battery. In the present embodiment, the power source unit 111A is removably mounted on the power supply unit 110 by a user.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of detecting the temperature of the heating unit 121A or the temperature around the heating unit 121A.

Furthermore, the sensor unit 112A may include a voltage sensor capable of measuring the terminal voltage of the power source unit 111A. The sensor unit 112A may further include a temperature sensor capable of detecting the temperature of the power source unit 111A.

Furthermore, the sensor unit 112A may comprise an input device, such as an operation button or a switch, for accepting input of information from the user. As an example, the sensor unit 112A may include an operation button serving as the input device that accepts mode change requests, which will be described later.

The notification unit 113A notifies the user of information. The notification unit 113A may, for example, be configured by a light-emitting device that emits light, a display device that displays images, a sound output device that outputs sound, or a vibration device that vibrates, etc.

The memory unit 114A stores various information (e.g., programs and data) for operation of the inhalation device 100A. The memory unit 114A may be configured by a nonvolatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs stored in the memory unit 114A, etc. For example, the control unit 116A controls the supply of electricity (power supply) from the power source unit 111A to each constituent component (for example, the heating unit 121A that will be described later), and controls charging of the power source unit 111A by means of power received from the external power source 1000. Note that the control unit 116A is realized by a central processing unit (CPU) or an electronic circuit such as a microprocessor, for example. As an example, the control unit 116A can be realized by an MCU 104 (MCU: Micro Controller Unit), or the like, which will be described later.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1, the heating unit 121A is configured as a coil obtained by winding a heat generating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity (power supply) to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The aerosol source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a polyhydric alcohol such as glycerin or propylene glycol, or a liquid such as water containing flavor components, for example. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not depicted) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared to a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### <1-2. Second configuration example of inhalation device>

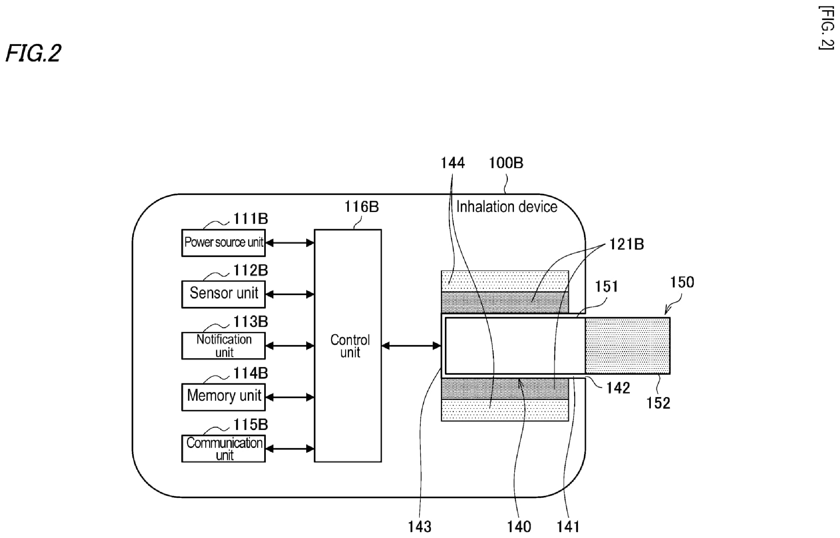

Fig. 2 is a schematic diagram schematically showing a second configuration example of an inhalation device. As shown in fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 2, the inhalation device 100B itself may also be referred to as the power supply unit. In this embodiment, the power source unit 111B is mounted so that it can be installed in and removed from the inhalation device 100B by a user.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path which is not depicted, and reaches the inside of the user's mouth together with the aerosol generated from the substrate portion 151.

In the example shown in fig. 2, the heating unit 121B is configured as a film heater formed by laying out a conductive track afforded by a heating resistive element having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow passage 180 according to the first configuration example, and the air flow passage 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the power source unit 111A and the power source unit 111B may be referred to as the "power source unit 111", the sensor unit 112A and the sensor unit 112B may be referred to as the "sensor unit 112", the notification unit 113A and the notification unit 113B may be referred to as the "notification unit 113", the memory unit 114A and the memory unit 114B may be referred to as the "memory unit 114", the communication unit 115A and the communication unit 115B may be referred to as the "communication unit 115", the control unit 116A and the control unit 116B may be referred to as the "control unit 116", and the heating unit 121A and the heating unit 121B may be referred to as the "heating unit 121".

### 2. External Configuration Example of Inhalation Device

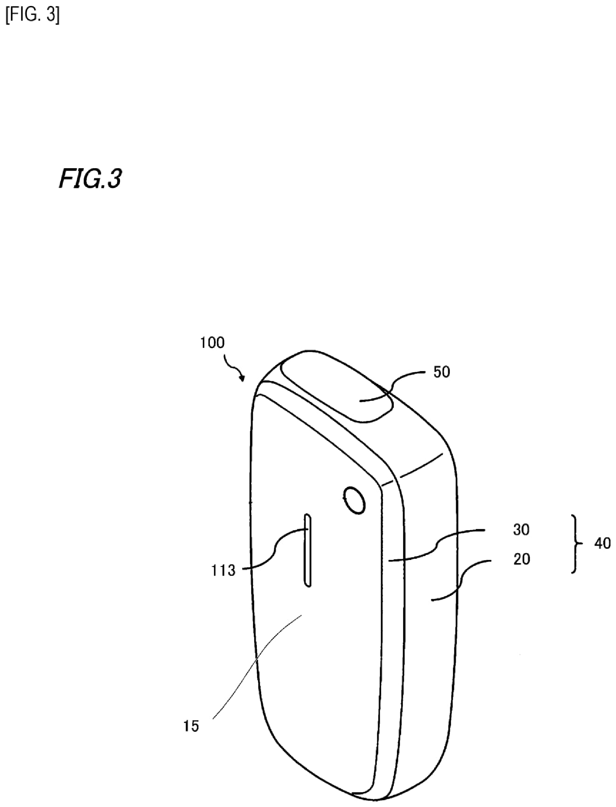

Fig. 3 is an overall oblique view of the inhalation device 100 according to the present embodiment. As shown in fig. 3, the inhalation device 100 comprises, for example, a case 20, and a shutter 50. The case 20 houses the power supply unit 110 of the inhalation device 100.

The case 20 is also fitted with a panel 30. The panel 30 is attached to the case 20 to configure an outermost housing 40 of the aerosol generation device 100. Furthermore, the inhalation device 100 comprises the panel 30, so that even if the power supply unit 110 generates heat, the heat released to the outside can be reduced. In other words, the panel 30 functions to insulate heat generated from the interior of the power supply unit 110. The panel 30 is also formed so that the surface thereof is approximately a curved surface. When the panel 30 is attached to the case 20, the panel 30 then defines an internal space together with the surface of the case 20.

When a user presses on a predetermined portion of the surface of the panel 30 with their fingertips, the panel 30 deforms to form an indentation toward the case 20. As a result of this deformation of the panel 30, a protrusion provided on the panel 30 comes into contact with an operation button provided on the surface of the case 20, thereby pressing the operation button. In other words, the finger-pressed portion of the surface of the panel 30 constitutes an operation portion 15 that receives the user's operation. It should be noted that the operation portion 15 may be a touch sensor provided on the panel 30 and may be operable by a user contacting this touch sensor with their fingertips.

### 3. Example of Operation Mode of Inhalation Device

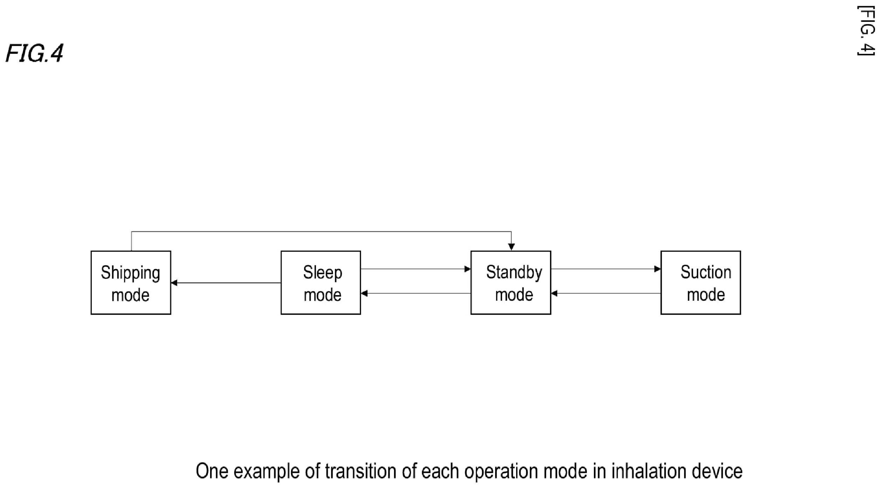

Fig. 4 is a schematic diagram illustrating an operation mode of the inhalation device 100 according to the present embodiment. As shown in fig. 4, the control unit 116 has a plurality of operation modes in which the inhalation device 100 is operated. In the present example, the control unit 116 has a suction mode, a standby mode, a sleep mode, and a shipping mode as operation modes for operating the inhalation device 100. The control unit 116 controls the discharge of power from the power source unit 111 to cause the inhalation device 100 to operate in the suction mode, the standby mode, the sleep mode and, and the shipping mode.

The suction mode is a mode in which heating control of the heating unit 121 is carried out. The control unit 116 carries out heating control of the heating unit 121 when the operation mode is switched to the suction mode.

The standby mode is a mode in which almost all functions are active except for heating control of the heating unit 121. The control unit 116 switches the operation mode from the standby mode to the suction mode when a predetermined operation is performed, such as a suction action by a user. Also, in the suction mode, the control unit 116 switches the operation mode from the suction mode to the standby mode when the heating control of the heating unit 121 ends, such as due to the time of energizing the heating unit 121 or the number of suctions by the user reaching an upper limit.

The sleep mode is a mode in which the inhalation device 100 consumes less power than in the standby mode, and it can directly transition to the standby mode. Therefore, the control unit 116 can reduce the power consumption of the power source unit 111 by transitioning the inhalation device 100 to the sleep mode, while maintaining a state in which it is possible to return to other modes as required. When the inhalation device 100 is operating in the sleep mode, the sensor unit 112 can detect opening of the shutter 50, connection of a USB cable, operation of the operation portion 15, and so on, and it is possible to monitor the remaining battery charge, but the heating unit 121 cannot be operated immediately. The control unit 116 switches the operation mode from the sleep mode to the standby mode when a predetermined operation is performed, such as operation of the operation portion 15 by a user. Also, the control unit 116 switches the operation mode from the standby mode to the sleep mode when a predetermined condition is met, such as a state with no operation lasts for a predetermined time in the standby mode.

The shipping mode is a mode in which the inhalation device 100 consumes less power than the sleep mode, the main power supply path from the power source unit 111 is interrupted, and the quiescent current is significantly reduced to minimize power consumption of the power source unit 111. In the shipping mode, discharge from the power source unit 111 is limited to the minimum necessary, for example, for the sensor unit 112 only that required to detect the connection of a USB cable, and so on, and that required to detect when the operation portion 15 is operated, for the control unit 116 only that necessary to change the mode of operation of the inhalation device 100 based on the function of the sensor unit 112 that detects the connection of a USB cable, and so on, and the function of the operation portion 15 that detects when the operation portion 15 is operated. The shipping mode is used, for example, during transportation after manufacturing and shipping of the inhalation device 100, or during long-term storage in a warehouse, or the like, to transport and store the inhalation device 100 with reduced power consumption of the power source unit 111. In this example, it is also used when replacing the power source unit 111, as described later. The control unit 116 switches the operation mode from the shipping mode to the standby mode when a predetermined operation is performed, such as operation of the operation portion 15 by a user or when an external power source 1000 is connected to the inhalation device 100. Note that the control unit 116 may switch the operation mode from the shipping mode to the sleep mode when a predetermined operation is performed, such as operation of the operation portion 15 by a user or when an external power source 1000 is connected to the inhalation device 100.

When in the shipping mode, the control unit 116 transitions to the standby mode when a predetermined operation is performed by the user. Also, when in the sleep mode, the control unit 116 transitions to the standby mode when a predetermined operation is performed by the user, and transitions to the shipping mode when a predetermined operation is performed by the user (an operation different from the operation that transitions to the standby mode). Also, when in the standby mode, the control unit 116 transitions to the suction mode when a predetermined operation is performed by the user, and transitions to the sleep mode when a predetermined operation is performed by the user (an operation different from the operation which transitions to the suction mode). In addition, when it is in the suction mode, it transitions to the standby mode when the predetermined operation by the user is performed or when a predetermined condition is satisfied. Note that when the control unit 116 is in the standby mode, the mode may be transitioned to the shipping mode by a predetermined operation by the user. In this case, the predetermined operation by the user when transitioning from the sleep mode to the shipping mode and the predetermined operation by the user when transitioning from the standby mode to the shipping mode may be the same operation.

### 4. Insertion and Removal of the Power Source Unit

The power source unit 111 is removably mounted on the power supply unit 110 by a user. It should be noted that in the inhalation device 100, the insertion and removal direction of the stick-type substrate 150 relative to the inhalation device 100 is the vertical direction, and in the inhalation device 100 the side in which the flavor source 131 and the stick-type substrate 150 are inserted is defined as the upper side. In other words, the stick-type substrate 150 is inserted into the inhalation device 100 from the upper side. Also, the direction perpendicular to the vertical direction may be called the transverse direction, and a surface facing the transverse direction may be called a side surface.

Note that although first and second examples are described below as examples of insertion and removal aspects of the power source unit 111, the power source unit 111 can be inserted into and removed from the power supply unit 110 by a user by aspects other than the first and second examples.

### 4-1. First Example of an Insertion and Removal Aspect of the Power Source Unit

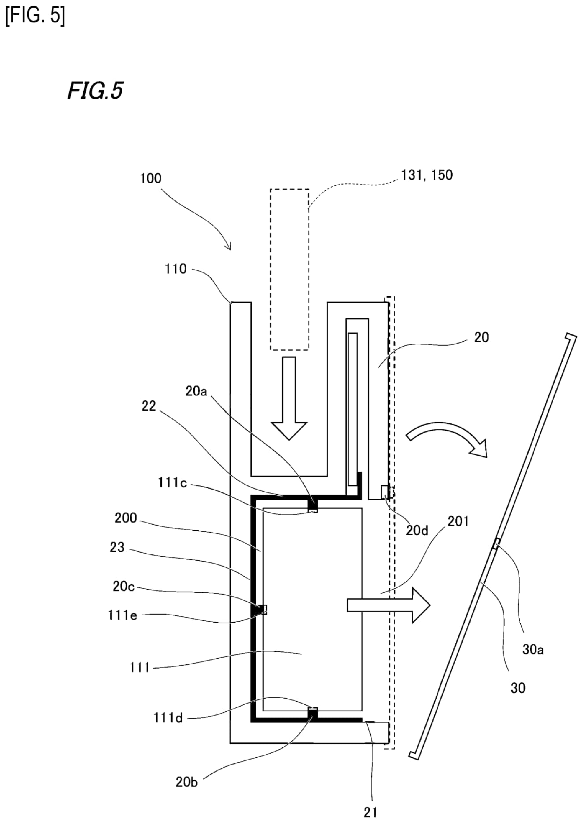

Fig. 5 is a schematic diagram illustrating a first example of an aspect of insertion/removal of the power source unit 111 in the inhalation device 100 according to the present embodiment. As shown in fig. 5, in the lower region of the case 20, the power source accommodating portion 200 is formed that can accommodate the power source unit 111. In the present example, an opening 201 is provided on the side surface of the power source accommodating portion 200, in which the power source unit 111 is insertable/detachable. When the panel 30 is removed from the case 20, the power source accommodating portion 200 communicates with the outside of the case 20, and the power source unit 111 can be inserted into the power source accommodating portion 200 from the transverse direction of the case 20. That is, the panel 30 also acts as a cover member for opening and closing the opening 201 of the power source accommodating portion 200.

The power source unit 111 comprises the positive electrode terminal 111c and the negative electrode terminal 111d, and the temperature terminal 111e through which an electrical signal relating to the temperature of the power source unit 111 flows. The case 20 is provided with a positive terminal connection portion 20a for electrically connecting with the positive electrode terminal 111c of the power source unit 111, a negative terminal connection portion 20b for electrically connecting with the negative electrode terminal 111d of the power source unit 111, and a temperature terminal connection portion 20c for electrically connecting with the temperature terminal 111e of the power source unit 111. The power source unit 111 is provided with a battery temperature sensor, which is not shown on the drawings. The battery temperature sensor is, for example, a thermistor. If the battery temperature sensor is, for example, a thermistor, the resistance value varies depending on the temperature. A configuration may be adopted in which, by performing an electrical conversion for this resistance value and causing a temperature terminal 111e to output the conversion, the temperature of the power source unit 111 can be detected.

When accommodated in the power source accommodating portion 200, the power source unit 111 is held in the power source accommodating portion 200. The power source unit 111 is held in the power source accommodating portion 200 with the positive electrode terminal 111c in electrical connection with the positive terminal connection portion 20a, the negative electrode terminal 111d in electrical connection with the negative terminal connection portion 20b, and the temperature terminal 111e in electrical connection with the temperature terminal connection portion 20c.

In the present example, the positive electrode terminal 111c is provided on the upper surface of the power source unit 111, the negative electrode terminal 111d on the lower surface of the power source unit 111, the temperature terminal 111e on the side of the power source unit 111, and the positive terminal connection portion 20a is provided on the upper wall 22 of the power power source accommodating portion 200, the negative terminal connection portion 20b is provided on the bottom wall portion 21 of the power source accommodating portion 200 and the temperature terminal connection portion 20c on a side wall portion 23 of the power power source accommodating portion 200. Note that the positions in which the positive terminal 111c, the negative terminal 111d, and the temperature terminal 111e are not limited to this, and may be provided on any side of the power source unit 111.

When the panel 30 is removed from the case 20 while the power source unit 111 is accommodated in the power source accommodating portion 200, the opening 201 of the is in an open state and communicates with the outside of the case 20, and the power source unit 111 can be removed from the power source accommodating portion 200. It should be noted that the panel 30 is attached to the case 20 via one or more hinges and may be provided to pivot the opening 201 of the power supply storage portion 200 openable/closable about the hinge.

In this way, the power source unit 111 is removably mounted on the power supply unit 110 by a user.

The power supply unit 110 is also able to detect whether the panel 30 is attached to the case 20 or whether the panel 30 has been removed from the case 20.

For example, the case 20 is fitted with an open/close detection sensor 20d that senses whether the panel 30 is attached to the case 20 or the panel 30 is removed from the case 20. In the present example, the open/close detection sensor 20d is a Hall IC. A Hall IC is an integrated circuit (IC) that converts magnetic strength into electrical signals by means of a semiconductor sensor. Specifically, the Hall IC is an integrated circuit (IC) that detects the approach of a magnet and outputs a signal, and returns to the original state when the magnet is separated.

On the other hand, the panel 30 is provided with a detected part 30a at a position opposite the open/close detection sensor 20d with the panel 30 correctly attached to the case 20. In the present example, the detected part 30A is a permanent magnet.

Therefore, the open/close detection sensor 20d detects close proximity of the detected part 30a, which is a permanent magnet, when the panel 30 is correctly attached to the case 20 and outputs a signal to the control unit 116, and does not output the signal when the panel 30 is not correctly attached to the case 20 and when the panel 30 is removed from the case 20, as the detected part 30a, which is a permanent magnet, is not in close proximity.

Thereby, the control unit 116 determines that the panel 30 is correctly attached to the case 20 and the opening 201 of the power source accommodating portion 200 is closed when receiving a signal from the open/close detection sensor 20d, and when no signal is received from the open/close detection sensor 20d, the control unit determines that the panel 30 has been removed from the case 20 and that the opening 201 of the power source accommodating portion 200 is in the open state.

### 4-2.Second Example of an Insertion and Removal Aspect of the Power Source Unit

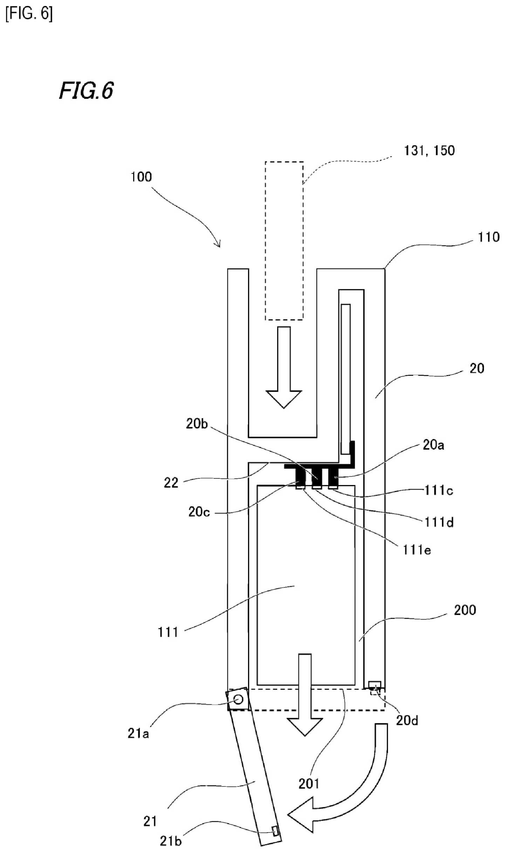

Fig. 6 is a schematic diagram illustrating a second example of an aspect of insertion/removal of the power source unit 111 in the inhalation device 100 according to the present embodiment. As shown in fig. 6, the case 20 has a bottom wall portion 21 constituting at least a part of the lower surface, and the bottom wall portion 21 is provided in the case 20 so that it can be opened and closed about a transversally extending hinge portion 21a.

In the lower region of the case 20, a power source accommodating portion 200 is formed that can accommodate the power source unit 111. When the bottom wall portion 21 is opened, the power source accommodating portion 200 is in communication with the outside of the case 20, allowing the power source unit 111 to be inserted into the power source accommodating portion 200 from the bottom of the case 20. That is, the bottom wall portion 21 acts as opening and closing member for the power source accommodating portion 200. The bottom wall portion 21 is detachable from the case 20, and when the bottom wall portion 21 is removed from the case 20, the power supply receiving portion 200 is in communication with the outside of the case 20, and the power source unit 111 may be insertable into the power supply storage portion 200 from below the case 20.

The power source unit 111 comprises the positive electrode terminal 111c and the negative electrode terminal 111d, and the temperature terminal 111e through which an electrical signal relating to the temperature of the power source unit 111 flows. The case 20 is provided with a positive terminal connection portion 20a for electrically connecting with the positive electrode terminal 111c of the power source unit 111, a negative terminal connection portion 20b for electrically connecting with the negative electrode terminal 111d of the power source unit 111, and a temperature terminal connection portion 20c for electrically connecting with the temperature terminal 111e of the power source unit 111. The power source unit 111 is provided with a battery temperature sensor, which is not shown on the drawings. If the battery temperature sensor is, for example, a thermistor, the resistance value varies depending on the temperature. A configuration may be adopted in which, by performing an electrical conversion for this resistance value and causing a temperature terminal 111e to output the conversion, the temperature of the power source unit 111 can be detected.

When accommodated in the power source accommodating portion 200, the power source unit 111 is held by the bottom wall portion 21 and a top wall portion 22 of the power source accommodating portion 200. The power source unit 111 is held in the power source accommodating portion 200 with the positive electrode terminal 111c in electrical connection with the positive terminal connection portion 20a, the negative electrode terminal 111d in electrical connection with the negative terminal connection portion 20b, and the temperature terminal 111e in electrical connection with the temperature terminal connection portion 20c.

In this example, the positive electrode terminal 111c, the negative electrode terminal 111d and the temperature terminal 111e are all provided on an upper surface of the power source unit 111, and the positive terminal connection portion 20a, the negative terminal connection portion 20b, and the temperature terminal connection portion 20c are provided in the top wall portion 22 of the power source accommodating portion 200.

When the bottom wall portion 21 is opened while the power source unit 111 is housed in the power source accommodating portion 200, the power source accommodating portion 200 is in communication with the outside of the case 20, and the power source unit 111 can be removed from the power source accommodating portion 200.

In this way, the power source unit 111 is removably mounted on the power supply unit 110 by a user.

Furthermore, the power source unit 110 is also enabled to detect whether the bottom wall portion 21 is in the closed or open state.

For example, the case 20 is fitted with an open/close detection sensor 20d which detects whether the bottom wall portion 21 is in the closed or open state. In the present example, the open/close detection sensor 20d is a Hall IC. A Hall IC is an integrated circuit (IC) that converts magnetic strength into electrical signals by means of a semiconductor sensor. Specifically, the Hall IC is an integrated circuit (IC) that detects the approach of a magnet and outputs a signal, and returns to the original state when the magnet is separated.

On the other hand, the bottom wall portion 21 is provided with a detected part at a position opposite the open/close detection sensor 20d in the closed state of the bottom wall portion 21. In the present example, the detected part 21b is a permanent magnet.

Therefore, the open/close detection sensor 20d detects close proximity of the detected part 21b, which is a permanent magnet, when the bottom wall portion 21 is in the closed state and outputs a signal to the control unit 116, and when the bottom wall portion 21 is in the open state, the detected part 21b, which is a permanent magnet, is not in close proximity, so no signal is output.

Thereby, the control unit 116 determines that, when receiving a signal from the open/close detection sensor 20d, the bottom wall portion 21 is in the closed state and the opening 201 of the power source accommodating portion 200 is in the closed state, and when no signal is received from the open/close detection sensor 20d, the control unit determines that the bottom wall portion 21 is in the open state and the opening 201 of the power supply storage portion 200 is in the open state.

### 1-5. Configuration Example of the Part Relating to Charging and Discharging of the Power Source Unit

Fig. 7 is a schematic diagram schematically showing a configuration example of a part of the inhalation device 100 relating to charging and discharging of the power source unit 111. In fig. 7, the thick solid lines denote electrical wiring, and the solid line arrows denote control signals or detection signals.

As shown in fig. 7, in addition to the power source unit 111, the inhalation device 100 further comprises: a power receiver 101, a charging IC 102, a battery level indicator 103, an MCU 104, and a protection IC 105. The control unit 116 includes, for example, the charging IC 102, the battery level indicator 103, and the MCU 104 shown in fig. 7, and so on.

The power source unit 111 is configured to be capable of being charged by means of power received from the external power source 1000. Here, the external power source 1000 is a device configured to be capable of outputting predetermined power. Also, the predetermined power is power that the inhalation device 100 is capable of receiving in terms of hardware, and may be, for example, DC power having a predetermined voltage (for example, 5 to 20 [V]). The external power source 1000 may be an alternating current (AC) adapter configured to be capable of outputting the specific power, for example. Furthermore, the external power source 1000 is not limited to an AC adapter, and may be, for example, a portable charger (also referred to as a mobile battery), a personal computer (PC), a smartphone, a tablet terminal, or the like.

The power source unit 111 is configured to be capable of supplying stored power to each component of the inhalation device 100, such as the charging IC 102, the battery level indicator 103, the MCU 104, and the heating unit 121 (not shown in fig. 7). It should be noted that fig. 7 shows an example in which power is supplied directly from the power source unit 111 to the MCU 104, but this is not limiting. For example, power may also be supplied from the power source unit 111 to the MCU 104 via the charging IC 102.

The power receiver 101 is configured to be capable of receiving power output from the external power source 1000. As an example, the power receiver 101 may be an external connection terminal provided in the case 20 that can be electrically connected to the external power source 1000. The external connection terminal is, for example, a receptacle to which a connector such as Universal Serial Bus (USB) or the like can be connected. Furthermore, the power receiver 101 may be a power-receiving coil, or similar, which is configured to be capable of contactlessly receiving power delivered from the external power source 1000. In this case, the method of contactless power transfer (WPT: wireless power transfer) may employ electromagnetic induction, magnetic resonance, or a combination of electromagnetic induction and magnetic resonance.

The charging IC 102 is an integrated circuit (IC) which is electrically provided between the power receiver 101 and the power source unit 111, and is configured to be capable of controlling charging of the power source unit 111 with the power received from the external power source 1000 via the power receiver 101.

As an example, when there is a request to start charging from a user, the charging IC 102 starts charging of the power source unit 111 with the power received from the external power source 1000 on the basis of a signal received from the MCU 104. Here, the request to start charging may be the establishment of an electrical connection between the inhalation device 100 and the external power source 1000, for example. Furthermore, the request to start charging may further comprise the performance of a predetermined operation once the electrical connection between the inhalation device 100 and the external power source 1000 has been established. Operating a predetermined operation button 15 provided on the inhalation device 100 is an example of this operation. Furthermore, this operation is not limited to a direct operation on the inhalation device 100, and it may equally be an operation on another device such as a smartphone which is capable of communicating with the inhalation device 100, for example. When there is a charging start request from the user, a signal indicating that there was a charging start request from the user is input to the MCU 104 via the charging IC 102, a signal indicating that the power source unit 111 starts charging with the power received by the MCU 104 from the external power source 1000 is output to the charging IC 102, and when a signal indicating the start of charging of the power source unit 111 is input from the MCU 104, the charging IC 102 starts charging of the power source unit 111 with the power received from the external power source 1000.

The charging IC 102 controls the power to charge the power source unit 111 when charging the power source unit 111. A constant current charging current value Icc [A], a constant voltage charging voltage value Vcv [V], a charging switching voltage Vc [V], and an end-of-charging voltage Ve [V] are set in the charging IC 102 and stored in the memory. The charging IC 102 controls the power used to charge the power source unit 111, based on the constant current charging current value Icc [A], the constant voltage charging voltage value Vcv [V], the charging switching voltage Vc [V], and the end-of-charging voltage Ve [V] stored in the memory. Details of the charging control of the power source unit 111 by the charging IC 102 are described later.

The battery level indicator 103 is an integrated circuit (IC) that measures the state of charge (SOC) of the power source unit 111. The battery level indicator 103 periodically measures the open circuit voltage between the terminals of the power source unit 111 and calculates the remaining charge of the power source unit 111 based on the measured open circuit voltage of the power source unit 111.

The battery level indicator 103 uses a current sensing resistor to accumulate the amount of current that flows into the power source unit 111 during charging, and measures the amount of current that flows out of the power source unit 111 during discharge. Based on the amount of current that flows into the power source unit 111 during charging and the amount of current that flows out of the power source unit 111 during discharge, the battery level indicator 103 periodically calculates the remaining charge of the power source unit 111, and stores it in the memory of the battery level indicator 103. Note that the battery level indicator 103 may also store measurement data such as the discharge properties (under no load) and temperature properties of the power source unit 111 in memory, and periodically measure the voltage, current, and temperature of the power source unit 111 while it is operating to calculate the impedance of the power source unit 111. Based on the calculated impedance of the power source unit 111, the remaining charge of the power source unit 111 may be calculated periodically.

Here, a discrepancy may occur between the remaining charge of the power source unit 111 calculated based on the open circuit voltage of the power source unit 111 and the actual remaining charge of the power source unit 111 due to ageing, and so on, of the power source unit 111.

Accordingly, when the operation mode of the inhalation device 100 is in the sleep mode, the battery level indicator 103 measures the open circuit voltage of the power source unit 111 and calculates the remaining charge of the power source unit 111 based on the open circuit voltage. The battery level indicator 103 then calculates a correction value from the difference between the remaining charge of the power source unit 111 calculated based on the open circuit voltage and the remaining charge of the power source unit 111 previously stored in the memory of the battery level indicator 103. Calculation of the correction value is performed periodically and the correction value is over-written and stored in the memory of the battery level indicator 103.

The battery level indicator 103 then calculates a corrected charge level of the the power source unit 111, which is corrected to be a more accurate charge level, based on the remaining charge level of the the power source unit 111 calculated based on the amount of current that flowed into the the power source unit 111 during charging and the amount of current that flowed out of the the power source unit 111 during discharge, and the correction value is stored in the memory of the battery level indicator 103. The calculated corrected charge remaining in the power source unit 111 may be notified to the notification unit 113.

Also, when the power source unit 111 is replaced by the user and a new power source unit 111 is mounted in the power supply unit 110, the battery level meter 103 measures the open-circuit voltage of the power source unit 111 and calculates the remaining charge of the the power source unit 111 based on the open-circuit voltage by an instruction from the MCU 104. The battery level indicator 103 then calculates the remaining charge in the power source unit 111, starting from this open circuit voltage, and the amount of current flowing into the power source unit 111 when charging and the amount of current flowing out of the power source unit 111 when discharge.

The battery level indicator 103 is set with an upper limit current Imax [A] for determining whether the power during discharge of the power source unit 111 is an overcurrent, and an upper limit voltage Vmax [V] for determining whether the power during discharge of the power source unit 111 is an overvoltage, which are stored in the memory. The battery level indicator 103 interrupts discharging from the power source unit 111 when the current during discharge of the power source unit 111 exceeds the upper limit current Imax [A] and when the voltage during discharge of the power source unit 111 exceeds the upper limit voltage Vmax [V].

Furthermore, the battery level indicator 103 has a nominal voltage Vn [V] of the power source unit 111 and a charge capacity CC [Ah] set and stored in the memory. The nominal voltage Vn [V] is a voltage value defined as an indication of the terminal-to-terminal voltage obtained when the power source unit 111 is used under normal conditions. The charge capacity CC [Ah] is the maximum amount of electrical charge released by the power source unit 111 from a fully charged state.

The MCU 104 is a computer that is mainly configured by a processor for implementing various types of arithmetic processing, and performs integrated control of the inhalation device 100 as a whole in accordance with a pre-prepared program. The control targets controlled by the MCU 104 include the charging IC 102, the battery level indicator 103, and so on.

The protection IC 105 is an integrated circuit (IC) that protects the power source unit 111 from overcharging, over-discharging, overvoltage, overcurrent, short circuits, and so on. The protection IC 105 operates independently of the control unit 116.

The protection IC 105 has a forced stop current Ifs [A] and a forced stop voltage Vfs [V] set and stored in the memory. The forced stop current Ifs [A] is set to a value greater than the upper limit current Imax [A] set in the battery level indicator 103. The protection IC 105 forces discharging from the power source unit 111 to stop when the current during discharge of the power source unit 111 is greater than or equal to the forced stop current Ifs [A]. The forced stop voltage Vfs [V] is set to a value greater than the upper limit voltage Vmax [V] set in the battery level indicator 103. The protection IC 105 forces discharge from the power source unit 111 to stop when the voltage during discharge of the power source unit 111 is greater than or equal to the forced stop voltage Vfs [V].

In this way, the power source unit 111 is doubly protected from overcurrent and overvoltage by the battery level indicator 103 and the protection IC 105. Under normal conditions, the current during discharge of the power source unit 111 is controlled by the battery level indicator 103 to be less than or equal to the upper limit current Imax [A], and the voltage during discharge of the power source unit 111 is controlled to be less than or equal to the upper limit voltage Vmax [V]. Also, in the event of a fault in the battery level indicator 103, the current during discharge of the power source unit 111 is controlled by the protection IC 105 to be less than or equal to the forced stop current Ifs [A], and the voltage during discharge of the power source unit 111 is controlled to be less than or equal to the forced stop voltage Vfs [V].

### 6. Charging Control of the Power Source Unit 111

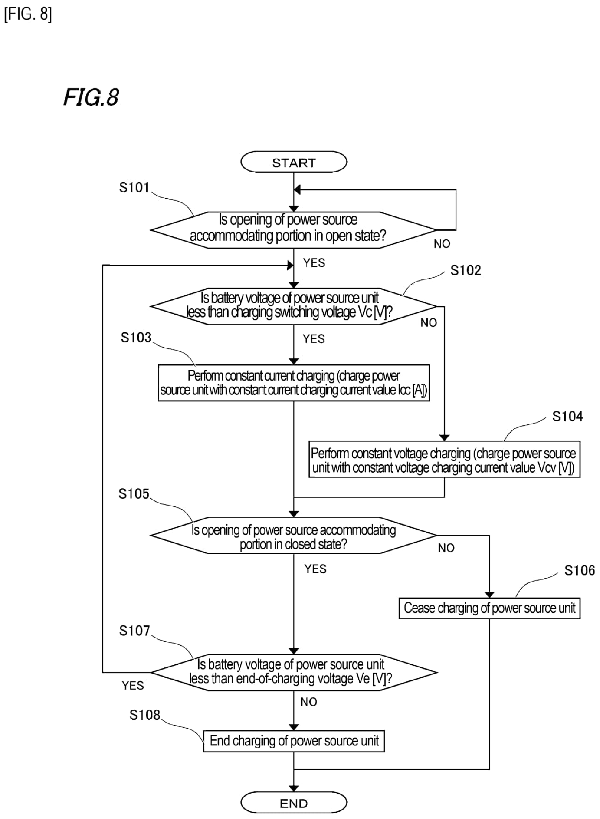

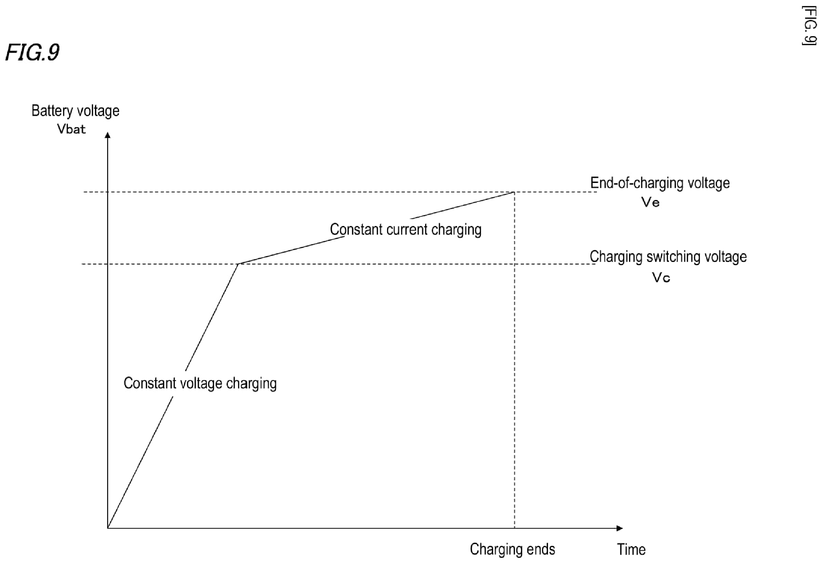

Next, charging control of the power source unit 111 in the inhalation device 100 is described with reference to fig. 8 and fig. 9. Fig. 8 is a flow chart showing an example of charging control of the power source unit 111 in the inhalation device 100 according to the present disclosure. Fig. 9 is a diagram showing an example of a change in battery voltage Vbat of the power source unit 111 when charging control of the power source unit 111 is performed in the inhalation device 100 of the present embodiment.

In the inhalation device 100, when a signal instructing the start of charging is input from the MCU 104, the charging IC 102 performs charging control of the power source unit 111 on the basis of a control value set in the charging IC 102.

The control unit 116 first determines whether the opening 201 of the power source accommodating portion 200 is in the closed state (step S101). The determination of whether the opening 201 of the power source accommodating portion 200 is in the closed state is based on whether or not a signal is received from the open/close detection sensor 20d, as previously described.

When the control unit 116 determines, at step S101, that the opening 201 of the power source accommodating portion 200 is not in the closed state, i.e. that the opening 201 of the power source accommodating portion 200 is in the open state, the control unit prohibits charging of the power source unit 111 and waits until the opening 201 in the power source accommodating portion 200 is in the closed state (step S101: NO loop).

In this way, if the opening 201 of the power source accommodating portion 200 is in the open state when the power source unit 111 is not charging, removal of the power source unit 111 from the inhalation device 100 can be prevented during charging of the power source unit 111 by charging o the power source unit 111 being prohibited; thus, faults in the inhalation device 100 and the power source unit 111 can be inhibited.

The control unit 116 proceeds to step S102 if, at step S101, the control unit determines that the opening 201 of the power source accommodating portion 200 is in the closed state (step S101: YES).

The control unit 116 determines, at step S102, whether the battery voltage Vbat [V] of the power supply unit 111 is less than the charge switching voltage Vc [V].

If, at step S102, the control unit 116 determines that the battery voltage Vbat [V] of the power supply unit 111 is less than the charging switching voltage Vc [V] (step S102: YES), the control unit proceeds to step S103 to perform a constant current charging, and charges the power source unit 111 with a constant current charging current value ICC [A] stored in the memory. The routine then advances to step S105.

On the other hand, if, at step S102, the control unit 116 determines that the battery voltage Vbat [V] of the power supply unit 111 is not less than the charging switching voltage Vc [V] (step S102: YES), or namely, that the battery voltage Vbat [V] of the power source unit 111 is the charging switching voltage Vc [V] or higher (step S102: NO), the control unit proceeds to step S104 to perform a constant current charging, and charges the power source unit 111 with a constant current charging current value Vcv [V] stored in the memory. The routine then advances to step S105.

In step S15, the control unit 116 determines whether the opening 201 of the power source accommodating portion 200 is in the closed state. The determination of whether the opening 201 of the power source accommodating portion 200 is in the closed state is based on whether or not a signal is received from the open/close detection sensor 20d, as previously described.

The control unit 116 determines, at step S105, that the opening 201 of the power source accommodating portion 200 is not in the closed state, i.e. that the opening 201 of the power source accommodating portion 200 is in the open state (step S105: NO), proceeds to step S106 to stop charging of the power source unit 111, and end the series of charging controls.

In this way, if the opening 201 of the power source accommodating portion 200 is in the open state when the power source unit 111 is charging, removal of the power source unit 111 from the inhalation device 100 can be prevented during charging of the power source unit 111 by ceasing the charging of the power source unit 111; thus, faults in the inhalation device 100 and the power source unit 111 can be inhibited.

The control unit 116 proceeds to step S107 if, at step S105, the control unit determines that the opening 201 of the power source accommodating portion 200 is in the closed state (step S105: YES).

The control unit 116 determines, at step S107, whether the battery voltage Vbat [V] of the power supply unit 111 is less than the end-of-charging voltage Ve [V].

The control unit 116 returns to step S102 and continues charging the power supply unit 111 if, at step S107, the battery voltage Vbat [V] of the power supply unit 111 is less than the end-of-charging voltage Ve [V] (step S107: YES).

If, at step S107, the battery voltage Vbat [V] of the power supply unit 111 is greater than or equal to the end-of-charging voltage Ve [V] (step S107: NO), the control unit 116 proceeds to step S108 to end charging of the power supply unit 111, and ends the series of charging controls.

In this way, the control unit 116 prohibits charging of the power supply unit 111 when having detected that the opening 201 of the power supply storage unit 200 is in an open state.

Thereby, removal of the power source unit 111 from the inhalation device 100 can be prevented during charging of the power source unit 111; thus, faults in the inhalation device 100 and the power source unit 111 can be inhibited.

Note that constant current charging may be performed until the battery voltage Vbat [V] of the power source unit 111 reaches a predetermined value, the charging may switch to constant voltage charging when the predetermined value is reached, and when the output current of the power source unit 111 falls below the predetermined current value, charging of the power source unit 111 may be ended and the series of charging controls may be ended.

### 7. Heating Control of Inhalation Device

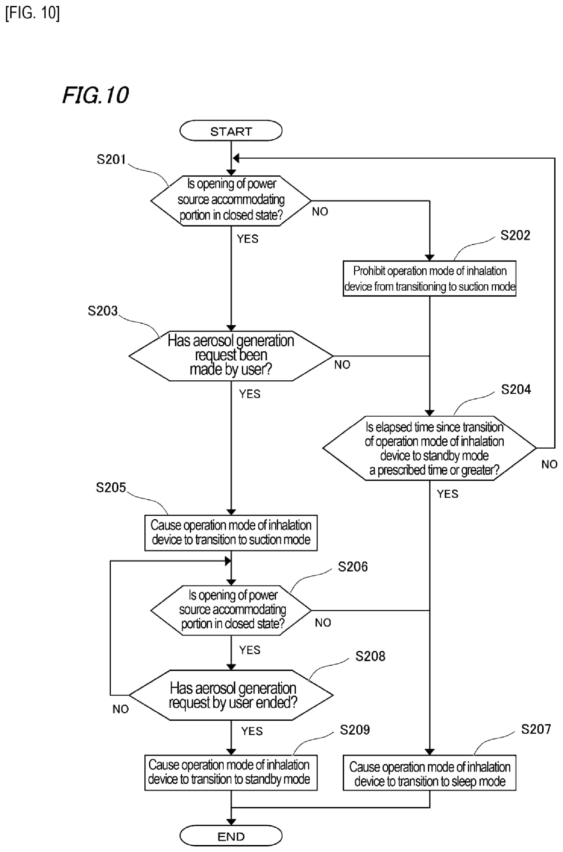

Next, heating control of the inhalation device 100 is described with reference to fig. 10. Fig. 10 is a flow chart showing an example of heating control in the inhalation device 100 according to the present embodiment. The heating control of the inhalation device 100 is initiated upon the transition of the operation mode of the inhalation device 100 to the standby mode.

The control unit 116 first determines whether the opening 201 of the power source accommodating portion 200 is in the closed state (step S201). The determination of whether the opening 201 of the power source accommodating portion 200 is in the closed state is based on whether or not a signal is received from the open/close detection sensor 20d, as previously described.

When the control unit 116 determines, at step S201, that the opening 201 of the power source accommodating portion 200 is not in the closed state, i.e. that the opening 201 of the power source accommodating portion 200 is in the open state (step S201: NO), the control unit proceeds to step S202 to prohibit transitioning of the operation mode of the inhalation device 100 to the suction mode, and proceeds to step S204. When the operation mode of the inhalation device 100 is prohibited from transitioning to the suction mode, power supply from the power source unit 111 to the heating unit 121 for heating the aerosol source is inhibited.

In this way, if the opening 201 of the power source accommodating portion 200 is in the open state when power for heating the aerosol source is not being supplied to the heating unit 121 from the power source unit 111, removal of the power source unit 111 from the inhalation device 100 can be prevented during the supply of power for heating the aerosol source to the heating unit 121 from the power source unit 111 by prohibiting power supply to the heating unit 121 from the power source unit 111 for heating the aerosol source; thus, faults in the inhalation device 100 and the power source unit 111 can be inhibited.

The control unit 116 proceeds to step S203 if, at step S201, the control unit determines that the opening 201 of the power source accommodating portion 200 is in the closed state (step S201: YES).

The control unit 116 determines, at step S203, whether an aerosol generation request has been made by the user. As to whether or not an aerosol generation request has been made by the user, the sensor unit 112 of the inhalation device 100 has an intake sensor, for example, and when the output value of the intake sensor is a threshold value or higher, it is determined that an aerosol generation request has been made by the user. It should be noted that whether or not an aerosol generation request has been made by the user may be determined based on the operation of the operation portion 15 by the user instead of the intake sensor. For example, it may be determined that an aerosol generation request has been made by the user when a predetermined operation has been performed on the operation portion 15 by the user to initiate inhalation of the aerosol. It may also be determined that an aerosol generation request has been made without operation of the operation portion 15 by a user, such as when a stick-type substrate 150 is inserted into the internal space 141 of the power supply unit 110.

When the control unit 116 determines, at step S203, that no aerosol generation request has been made by the user (step S203: NO), the control unit proceeds to step S204 to determine whether the elapsed time since the operation mode of the inhalation device 100 transitioned to the standby mode is greater than or equal to a predetermined time.

If, at step S204, the control unit 116 determines that the elapsed time since the operation mode of the inhalation device 100 transitioned to the standby mode is greater than or equal to the predetermined time (step S204: YES), the control unit proceeds to step S207 to cause the operation mode of the inhalation device 100 to transition to sleep mode, and ends the series of controls. On the other hand, the control unit 116 returns to step S201 if, at step S204, the elapsed time since the operation mode of the inhalation device 100 transitioning to the standby mode is not more than a predetermined time, i.e. if it is determined that the elapsed time since the operation mode of the inhalation device 100 transitioned to the standby mode is less than the predetermined time (step S204: NO).

When the control unit 116 determines, at step S203, that an aerosol generation request has been made by the user (step S203: YES), the control unit proceeds to step S205 to transition the operation mode of the inhalation device 100 to the suction mode, starts the supply of power from the power source unit 111 to the heating unit 121 for heating the aerosol source. The routine then advances to step S206.

The control unit 116 determines, at step S206, whether the opening 201 of the power source accommodating portion 200 is in the closed state. The determination of whether the opening 201 of the power source accommodating portion 200 is in the closed state is based on whether or not a signal is received from the open/close detection sensor 20d, as previously described.

If the control unit 116 determines, at step S206, that the opening 201 of the power source accommodating portion 200 is not in the closed state, i.e. that the opening 201 of the power source accommodating portion 200 is in the open state (step S206: NO), the control unit proceeds to step S207 to transition the operation mode of the inhalation device 100 to the sleep mode and cease the supply of power from the power source unit 111 to the heating unit 121 for heating the aerosol source, ending the series of controls.

In this way, if the opening 201 of the power source accommodating portion 200 is in the open state when power for heating the aerosol source is being supplied to the heating unit 121 from the power source unit 111, removal of the power source unit 111 from the inhalation device 100 can be prevented during the supply of power for heating the aerosol source to the heating unit 121 from the power source unit 111 by ceasing power supply to the heating unit 121 from the power source unit 111 for heating the aerosol source; thus, faults in the inhalation device 100 and the power source unit 111 can be inhibited, and the user can also be prevented from contacting the power source unit 111 under load such as charging or discharging.

The control unit 116 proceeds to step S208 if, at step S206, the control unit determines that the opening 201 of the power source accommodating portion 200 is in the closed state (step S206: YES).

The control unit 116 determines, at step S208, whether the aerosol generation request made by the user has ended. As to whether or not the aerosol generation request made by the user has ended, the sensor unit 112 of the inhalation device 100 has an intake sensor, for example, and when the output value of the intake sensor has fallen to below a threshold value after reaching the threshold value or higher, it is determined that the aerosol generation request made by the user has ended. In addition, when the elapsed time period since the aerosol generation request has been made reaches the predetermined time period, it may be determined that the aerosol generation request has ended irrespective of the output value of the intake sensor. Furthermore, when the stick-shaped substrate 150 is removed from the power supply unit 110, it may be determined that the request for generation of aerosol has ended irrespective of the output value of the intake sensor.

When the control unit 116 determines, at step S208, that an aerosol generation request has been made by the user (step S208: NO), the control unit returns to step S206 to continue the supply of power from the power source unit 111 to the heating unit 121 for heating the aerosol source.

When the control unit 116 determines, at step S208, that an aerosol generation request has been made by the user (step S208: YES), the control unit proceeds to step S209 to transition the operation mode of the inhalation device 100 to a standby mode, ends the supply of power from the power source unit 111 to the heating unit 121 for heating the aerosol source, and ends the series of controls.

In this way, the control unit 116 prohibits the supply of power from the power source unit 111 to the heating unit 121 for heating the aerosol source when having detected that the opening 201 of the power supply storage portion 200 is in an open state.

Thereby, removal of the power source unit 111 from the inhalation device 100 can be prevented during supply of power for heating the aerosol source to the heating unit 121 from the power source unit 111; thus, faults in the inhalation device 100 and the power source unit 111 can be inhibited.

As explained above, in the inhalation device 100 of the present disclosure, the control unit 116 controls the power source unit 111 based on the detection result of an open/close detection sensor 20d capable of detecting the open/close state of the opening 201 of the power supply storage unit 200.

Thereby, removal of the power source unit 111 from the inhalation device 100 can be prevented during charging/discharging of the power source unit 111; thus, faults in the inhalation device 100 and the power source unit 111 can be inhibited.

Embodiments of the present invention were described above, but the technical scope of the present invention is not limited to the embodiments above.

For example, in the present disclosure, as an example of controlling the power source unit 111 based on the detection result of the open/close detection sensor 20d, charging control of the power source unit 111 and heating control of the inhalation device 100 were described, but the power source unit 111 may be controlled as control other than the charging control of the power source unit 111 and the heating control of the inhalation device 100.

The present specification sets forth at least the following features. Corresponding components, and so on, in the embodiments described above are shown by way of example in parentheses, but there is no limitation to such components.
(1) An aerosol generation device (inhalation device 100) comprising: a power source unit (power source unit 111);
   a control unit (control unit 116) for controlling the power source unit; and
   a housing (case 20) having a power source accommodating portion (power source accommodating portion 200) for accommodating the power source unit,
   the aerosol generation device heating an aerosol source to generate an aerosol, wherein
   the power source accommodating portion has an opening (opening 201) in which the power source unit can be inserted and removed,
   the power source unit is removably installed in the power source accommodating portion, the aerosol generation device further comprises
   a cover member (panel 30, bottom wall portion 21) for opening and closing the opening of the power source accommodating portion, and
   a detection unit (open/close detection sensor 20d) for detecting an open/close status of the opening by the cover member, and
   the control unit controls operation of the power source unit on the basis of a detection result of the detection unit.

According to (1), removal of the power source unit from the aerosol generation device can be prevented during charging/discharging of the power source unit; thus, faults in the aerosol generation device and the power source unit can be inhibited.

(2) The aerosol generation device according to (1), wherein
the aerosol generation device further comprises a heating unit (heating unit 121) for heating an aerosol source, and
the control unit
prohibits the supply of power from the power source unit to the heating unit for heating the aerosol source when having detected that the opening is in an open state.

According to (2), removal of the power source unit from the aerosol generation device can be prevented during supply of power for heating the aerosol source to the heating unit from the power source unit; thus, faults in the aerosol generation device and the power source unit can be inhibited.

(3) The aerosol generation device according to (1), wherein
the aerosol generation device further comprises a heating unit (heating unit 121) for heating an aerosol source, and
the control unit
ceases the supply of power from the power source unit to the heating unit for heating the aerosol source when the detection unit has detected that the opening is in an open state during supply of power for heating the aerosol source to the heating unit from the power source unit.

According to (3), removal of the power source unit from the aerosol generation device can be prevented during supply of power for heating the aerosol source to the heating unit from the power source unit; thus, faults in the aerosol generation device and the power source unit can be inhibited.

(4) The aerosol generation device according to (1), wherein
the aerosol generation device further comprises a heating unit (heating unit 121) for heating an aerosol source, and
the control unit
prohibits the supply of power from the power source unit to the heating unit for heating the aerosol source when the detection unit has detected that the opening is in an open state during supply of power for heating the aerosol source to the heating unit from the power source unit.

According to (4), removal of the power source unit from the aerosol generation device can be prevented during supply of power for heating the aerosol source to the heating unit from the power source unit; thus, faults in the aerosol generation device and the power source unit can be inhibited, and the user can also be prevented from contacting the power source unit under load such as charging or discharging.

(5) The aerosol generation device according to (1), wherein
the control unit
prohibits charging of the power source unit when the detection unit has detected that the opening is in an open state.

According to (5), removal of the power source unit from the aerosol generation device can be prevented during charging of the power source unit; thus, faults in the aerosol generation device and the power source unit can be inhibited.

(6) The aerosol generation device according to (1), wherein
the control unit
ceases charging of the power source unit when the detection unit has detected that the opening is in an open state during charging of the power source unit.

According to (6), removal of the power source unit from the aerosol generation device can be prevented during charging of the power source unit; thus, faults in the aerosol generation device and the power source unit can be inhibited.

(7) The aerosol generation device according to (1), wherein
the control unit
prohibits charging of the power source unit when the detection unit has detected that the opening is in an open state when the power source unit is not charging.

According to (7), removal of the power source unit from the aerosol generation device can be prevented during charging of the power source unit; thus, faults in the aerosol generation device and the power source unit can be inhibited.

### REFERENCE SIGNS LIST

100 Inhalation device (aerosol generation device)
111 Power source unit
116 Control unit
121 Heating unit
20 Case (housing)
20d Open/close detection sensor (detection unit)
200 Power source accommodating portion
201 Opening

## Claims

1. An aerosol generation device comprising: a power source unit;
a control unit for controlling the power source unit; and
a housing having a power source accommodating portion for accommodating the power source unit,
the aerosol generation device heating an aerosol source to generate an aerosol, wherein
the power source accommodating portion has an opening in which the power source unit can be inserted and removed,
the power source unit is removably installed in the power source accommodating portion, the aerosol generation device further comprises
a cover member for opening and closing the opening of the power source accommodating portion, and
a detection unit for detecting an open/close status of the opening by the cover member, and
the control unit controls operation of the power source unit on the basis of a detection result of the detection unit.

2. The aerosol generation device according to claim 1, wherein
the aerosol generation device further comprises a heating unit for heating an aerosol source, and
the control unit
prohibits the supply of power from the power source unit to the heating unit for heating the aerosol source when having detected that the opening is in an open state.

3. The aerosol generation device according to claim 1, wherein
the aerosol generation device further comprises a heating unit for heating an aerosol source, and
the control unit
ceases the supply of power from the power source unit to the heating unit for heating the aerosol source when the detection unit has detected that the opening is in an open state during supply of power for heating the aerosol source to the heating unit from the power source unit.

4. The aerosol generation device according to claim 1, wherein
the aerosol generation device further comprises a heating unit for heating an aerosol source, and
the control unit
prohibits the supply of power from the power source unit to the heating unit for heating the aerosol source when the detection unit has detected that the opening is in an open state during supply of power for heating the aerosol source to the heating unit from the power source unit.

5. The aerosol generation device according to claim 1, wherein
the control unit
prohibits charging of the power source unit when the detection unit has detected that the opening is in an open state.

6. The aerosol generation device according to claim 1, wherein
the control unit
ceases charging of the power source unit when the detection unit has detected that the opening is in an open state during charging of the power source unit.

7. The aerosol generation device according to claim 1, wherein
the control unit
prohibits charging of the power source unit when the detection unit has detected that the opening is in an open state when the power source unit is not charging.
